# EUROPEAN PATENT SPECIFICATION

(11) **EP 2 916 651 B1**
(45) Date of publication and mention of the grant of the patent: **20.11.2019**
(21) Application number: 13791101.2
(22) Date of filing: 17.05.2013
(51) Int. Cl.: A01N 25/02, A01N 25/24, C09D 5/14, A01P 3/00

(54) **CARRIERS FOR PESTICIDES AND PROCESS FOR FORMING ADHERENT PESTICIDE FILM**
TRÄGER FÜR PESTIZIDE UND VERFAHREN ZUR BILDUNG EINES PESTIZIDHAFTFILMS
VÉHICULES POUR PESTICIDES ET PROCÉDÉ POUR FORMER UN FILM DE PESTICIDE ADHÉRENT

(30) Priority: 18.05.2012 HU P1200293
(43) Date of publication of application: 16.09.2015
(73) Proprietor: BVN Növényvédö KFT, 1097 Budapest (HU)
(72) Inventor: BAKÁNY Gábor, H-2045 Törökbálint (HU); VERÉB, Lajos, H-1122 Budapest (HU)
(74) Representative: Fehérvari, Flora
(86) International application number: PCT/HU2013/000047
(87) International publication number: WO 2013/171525

(56) References cited:
- WO-A1-2005/082141
- WO-A1-2008/031512
- WO-A1-2011/051654
- CA-A1- 2 151 426
- CH-A5- 651 846
- GB-A- 700 308
- GB-A- 2 336 538
- HU-A2- 0 600 108
- HU-A2- 0 600 108
- US-A1- 2004 191 373
- US-A1- 2005 019 434
- US-A1- 2005 129 662
- US-A1- 2007 142 520
- US-A1- 2008 214 678
- US-A1- 2010 159 111
- US-A1- 2011 039 031
- US-A1- 2011 306 643
- US-B2- 7 175 851
- Heirloom: "Oiling Fruit Trees", The Heirloom Orchardist, 15 April 2008 (2008-04-15), XP055520654, Retrieved from the Internet: URL:http://www.heirloomorchardist.com/the_ heirloom_orchardist/2008/04/the-cultivator .html. [retrieved on 2018-10-31]

## Description

### FIELD OF THE INVENTION

The invention concerns the use of drying oil containing carriers forming polymerizable films in pesticide formulations, and adherent pesticide formulations containing said carriers and having controllable properties. The invention also covers a process for forming polymerized pesticide film containing the carrier.

### BACKGROUND OF THE INVENTION

In modern plant protection, it is an important aspect that the substances applied should reach the desired effect with the least environmental load. Therefore, it is highly important to facilitate the absorption of the active substances applied and maintain their effect over a sufficiently long period of time. Since, after their application, plant protection chemicals are frequently made ineffective by environmental effects. From among the numerous environmental effects, the leaching by rain, hydrolytic processes and light effects are considered to be the ones that most adversely affect the desired result. This is the reason why, in addition to the primer properties of a given active substance, the role of formulations prepared by colloidal, physical or chemical developments is becoming ever more appreciated. The interdisciplinary application of different technical fields is similarly important. As adherence enhancers different mineral oil derivatives, such as paraffin oils and vaseline oils, have been used for a long time. However, from an environmental point of view these compounds are becoming decreasingly acceptable. Additionally, during rains these compounds are significantly re-emulged and leached out and can cause also burning. The use of fat of animal origin might have public health consequences.

Drying oils have been used for a long time in the paint industry and in corrosion protection. Drying oils bind the protecting pigments (such as, ferric oxide red, organic pigments, etc.) to metal or other surfaces to be protected, by which a hard and wear-resistant layer can be formed.

The Hungarian Patents Nos. 223091 and 223092 relate to pesticide formulations with improved shelf-life and higher efficiency, which in compliance with the main claim, contain organic or inorganic fungicide agent; plant oils, preferably rapeseed or sunflower oil, as adjuvant; TMTD (tetramethyl thiuram disulfide) as antioxidant; lecithin and other additives. These formulations significantly differ from the pesticide formulations of the present invention in that they compulsorily contain TMTD. TMTD is a strong antioxidant which is added by the authors to prevent rancidity and to improve storage-life. However, TMTD significantly slows down the polymerization processes therefore no good quality film can be formed in its presence. Accordingly, polymerization or film formation was not observed for these compositions and no such process was mentioned in the above cited documents.

Hungarian Patent Application No. P0600108 describes fungicide compositions having improved effect and photostability and they contain different fungicide agents, plant oils, preferably rapeseed or sunflower oil, further mineral oil, lecithin, as well as light absorbers and other substances. Mineral oils, which do not polymerize under environmental conditions, are also present in these formulations. Formulations used in the experiments disclosed in said application contained mineral oils and drying plant oils in a ratio from 1:1 to 1:3. In such ratios drying oils are not capable of forming solid films. In formulations containing rapeseed oil as plant oil the authors used mineral oil in lower ratios, but rapeseed oil is semi-drying oil which cannot solidify even in the presence of lower concentration of mineral oil. Example 4 of P0600108 contains sunflower oil in a ratio of 82:1 as compared to white oil, but in this example the ratio of lecithin to sunflower oil is more than 24:100. Lecithin is an antioxidant, which inhibits the polymerization of sunflower oil when used in such a high ratio. Composition e) of example 17 does not contain mineral oil but contains 2.5 % carboxymethyl cellulose. When this formulation dries, carboxymethyl cellulose encapsulates sunflower oil and the latter, secluded from air, cannot polymerize.

Accordingly, no polymerization or formation of a well-adhering solid film layer is described in this document and no such processes can be inferred from its contents.

In US2005/019434A1 selectivity (fitotoxicity) and biological activity of fungicide formulations containing mineral oils and drying plant oils were compared. In the basic composition used in the experiments a potent antioxidant, 1.2-benzothiazolin-3-one was used. In the presence of this agent the natural polymerization of drying plant oils cannot occur. Moreover the plants were subjected to rainwater treatment four hours after the compositions were sprayed. In such short time the polymerization of a drying plant oil would barely start even if a strong antioxidant were not present in the compositions. In line with this, considerable amount of composition were washed off the plants, as it can be seen from the experimental data disclosed in the document.

WO2011/051654 relates to sprayable liquid edible compositions containing plant oil and lecithin. In these compositions antioxidants (i.e. lecithin and tocopherol) were used to inhibit the polymerization of plant oils.

WO2008/031512 relates to agrochemical compositions containing hydrogenated castor oil and plant oil or mineral oil. In each example disclosed in this document a powerful antioxidant, butylhydroxytoluene was used. The polymerization of plant oils cannot occur in the presence of this antioxidant.

US2011/039031 relates to a carrier, a formulation and a method for the preservation treatment of timber. Firstly, in this technical solution the presence of water content is disadvantageous. Secondly, these formulations penetrate under the surface of the wood material wherein they may remain mobil for up to several months. The penetration of potentially harmful components under the surface of a living plant would be definitely unwanted. Accordingly, this document describes a technical solution which basically differs from the present invention.

GB2336538 relates to liquid or paste compositions for controlling tree pest. The compositions include volatile solvents, namely white spirit or turpentine or ethanol or water, otherwise they have very different components which are mostly water insoluble. Only a few compositions contain drying plant oil. Some of the compositions are paste-like, others are fluid, and they solidify within a few days or remain greasy for several weeks, even if they contain plant oil. In this document various components having antioxidant property are used and the polymerization of plant oils is not mentioned.

Furthermore, in this document pests are smothered by excluding air, when the liquid or the paste is applied by brush on the bark of tree. On the other hand, the present compositions are suspoemulsions or wash oil compositions which, after drying, do not cover the stomata of the plant.

US2005/129662 relates to compositions containing soybean oil. As natural components, soybean oil includes various antioxidants and thus it does not tend to polymerize in the air.

CA 2 151 426 A1 discloses pesticide carrier for wood treatment containing 1 % of lecithin and cotton seed oil.

US 2011/306643 A1 discloses formulation containing: imidacloprid 0.68 %, sunflower oil 86.02 %, caprylic/capric triglyceride 2.0 %, surfactants 10 % and 0.2 % BHT. WO 2005/082141 A1 discloses composition containing: 5.5 part weight of Chromafenozide; 84.5 part weight of unroasted-sesame-oil, 5.0 part polyoxyethylene castor-oil ether, 5.0 part imidazoline type-surfactant.

US 2010/159111 A1 discloses that addition of as little as 7 % of Topcithin (contains 4.3 % lecithin) prevents polymerisation of high oleic oils.

US 2007/142520 A1 discloses drying paint containing: alkyd resin 33.4 %, linseed oil 23.5 %, soybean oil 21.0 %, soy lecithin 3.1 % (ratio oils:lecithin 17.6), drying catalyst, anti-skin agent 0.5 %.

US 2004/191373 A1 discloses pan spray containing: Lecithin 0.5-1 %, grape seed oil 10-15 % and safflower, corn and/or canola oil(s) q.s. to 100 % and may further contain anti-fungal agents.

US 2008/214678 A1 discloses the use of 90 % sunflower oil and 10 % lecithin as a carrier for aqueous extract of garlic.

CH 651 846 A5 discloses a water dispersable paint containing linseed oil and an emulsifier. http:// www.heirloomorchardist.com/the_heirloom_orchardist/2008/04/the-cultivator.html discussed the use of the linseed oil as a dormant oil.
In summary, the present invention, which is based on the use of a polymerizing film forming carrier in pesticide formulations, cannot be extrapolated from the prior art.

The aim of the inventors' study was to develop a pesticide formulation which, after its application to leaf surfaces or to other plant surfaces, irreversibly converts to a protective film thereby increasing its efficiency.

The above mentioned aim is accomplished by using a carrier containing drying oils of plant origin. Consequently, in the nature the pesticide formulation converts to a solid film resulting in an improved plant protection effect.

Pesticide formulation containing the film-forming carrier elaborated by the present inventors or the coating layer formed therefrom facilitates the absorption and controls the release of the active substance while it does not block the metabolic processes of the plant, such as water and ion absorption and desorption, and gas exchange.

### SUMMARY OF THE INVENTION

The invention is based on the discovery that drying oils go through polymerization in open air, as a consequence they become solid. This property can be readily utilized in pesticide formulations which, after their application as oils or oil-water suspoemulsions to the plant or to its surrounding, will solidify to form a film coating in a few hours or within a day and thus a pesticide formulation having improved efficiency and good adhesion properties is obtained.

Therefore, the present invention relates to the use of a polymerizable, film-forming carrier in pesticide formulations.

The said carrier contains a drying plant oil as film forming oil, and lecithin and optionally a non-drying plant oil as an oil for adjusting the consistency of the formed film.

The drying oil is selected from the group of sunflower oil, linseed oil, hemp seed oil, grape seed oil, sesame oil, tree oil or a mixture thereof; and the non-drying oil is selected from the group of rapeseed oil, palm oil, olive oil, castor oil or a mixture thereof.

Furthermore, the invention concerns pesticide formulations which is a suspoemulsion, or wash oil and these formulations contain the film-forming carrier of the invention, and one or more active substances and optional additives selected from the group of emulsifier, antifoaming agent, tixotropizing agent, pH adjuster, pH stabilizer, dispersing agents, viscosity-adjusting and protecting colloid, bactericide, antifreezer, loosener and solvent(s) or a mixture thereof, and supplemented with water, with the proviso that mineral oil is not present.

The invention also concerns wash oil compositions which contain the film-forming carrier according to the invention and modified ethoxylated fatty acid emulsifier.

The pesticide formulation according to the invention is a well-adhering pesticide formulation having controllable properties.

In certain embodiments of the invention, the pesticide formulation has controllable consistence, controllable solubility, releases the active substance in a controllable manner, facilitates absorption, delays oxygen absorption from the air and/or shows antioxidant effect.

In certain embodiments of the invention, the pesticide formulation contains one or more pesticide agents selected from but not limited to the following ones: elementary sulfur, copper hydroxide, copper oxychloride, copper oxide, basic copper sulfate, captan (N-(trichloro-methylthio)-tetrahydro-phtalamide), tebuconazole ((RS)-1-p-chlorophenyl-4,4-dimethyl-3-(1H-1,2,4-triazol-1-ylmethyl)-pentan-3-ol), thiophanate methyl (dimethyl-4,4'-(o-phenylene)-bis(3-thioallophanate)).

The pesticide formulation of the invention is a pesticide suspoemulsion, or a wash oil composition.

Additionally, the invention provides a method suitable for forming a polymerized pesticide film, the process comprising applying the pesticide formulation of the invention to the application area and by exposing plant oils present in the carrier to the impact of environmental oxygen, allowing them to polymerize for a few hours or for a day, to obtain a polymerized pesticide film.

In certain embodiments of the invention, the pesticide film of the invention is formed on a plant or on its roots, stem or leaf, or on the seeds or on the soil or on any other growth media.

### DETAILED DESCRIPTION OF THE INVENTION

Accordingly, the invention relates to the use of a carrier capable of forming a solidifying film in pesticides. This carrier consists of a drying plant oil as a film-forming oil, and lecithin and optionally a non-drying plant oil as an oil for adjusting the consistency of the formed film, wherein the mass ratio of drying oil to non-drying oil is minimum 3:1 and the mass ratio of lecithin to the plant oils is in the range from about 1:5 to about 1:100.

The inventors discovered that the carriers of the invention merely by being exposed to natural environmental oxygen and without separate initiating substances being added to them, they convert to a solid film layer and form a well-adhering film of controllable properties, on the surface. By the application of these carriers in pesticide formulations, said pesticide formulations form a well-adhering, solid film coating on the treated area, such as plants.

The drying oil is selected from the group of sunflower oil, linseed oil, hemp seed oil, grape seed oil, sesame oil, tree oil or a mixture thereof; and the non-drying oil is selected from the group of rapeseed oil, palm oil, olive oil, castor oil or a mixture thereof.

The drying oils used as film-forming substance in the carrier of the invention is preferably sunflower oil or linseed oil but not limited to them.

The consistency of the film layer can be adjusted according to the projected application of the formulation of the invention. For this, along with the film-forming oil, a non-drying oil, such as rapeseed oil can be used.

The active substance-dissolving capacity of the film layer can be controlled by the addition of transesterified plant oils and optionally other solvents.

The pesticide formulation of the invention is in the form of a pesticide suspoemulsion, or wash oil composition. However, the pesticide formulation of the invention can be utilized in several fields of agrochemistry.

By the application of the formulations of the invention, a significant improvement in efficiency and a prolonged duration of effect can be reached. The solidifying film binds the contact pesticides to the surface and facilitates the absorption of systemic pesticide active substance. Additionally, the properties of the forming coating can be altered in a wide range in accordance with the properties of the given pesticide, or the fertilizer used for a given plant or soil.

Due to the covering effect of the film and its oxygen absorption delaying effect as well as the natural antioxidant effect of the plant oils, the pesticide formulation comprising the film-forming carrier of the invention provides enhanced protection for the active substances sensitive to environmental oxygen.

The carrier of the invention comprises plant lecithins as an emulsifier. The lecithin is a compound with antioxidant activity. In the food industry and the pharmaceutical industry the lecithin is widely used as a preservative and emulsifier as well as a stabilizing agent. The inventors unexpectedly discovered that in spite of its above mentioned properties, lecithin does not inhibit the polymerization processes of drying oils or film formation, therefore it can advantageously be used in the film-forming carrier of the invention. In the presence of lecithin an even, thin, and weather-proof film will form relatively quickly, i.e. within a few hours or in a day. Due to its antioxidant effect, the lecithin protects the formed film and inhibits unwanted processes, such as rancidity, and protects oxygen-sensitive active substances.

Plant lecithin that can be used in the carrier of the invention is for example soy lecithin or rapeseed lecithin, and certain commercially available formulations contain the respective plant oil, such formulation is, for example, Lecico F600 IPM mentioned in the examples.

In the formulations of the invention the mass ratio of the drying oil and the non drying oil is minimum 3:1, and the mass ratio of lecithin to plant oils is in the range from about 1:5 to about 1:100, preferably from 1:20 to 1:30.

The pesticide formulation of the invention may be in the form of suspoemulsion.
The suspoemulsion formulations may contain, as film-forming carrier, 5 to 30 % by weight, preferably 15 to 20 % by weight film-forming oil, 0 to 8 % by weight oil for adjusting the consistency of the formed film and 0.3 to 3 % by weight lecithin emulsifier; and 1 to 5 % by weight, preferably 2 to 3 % by weight ethoxylated fatty acid emulsifier.

As an active substance, the suspoemulsion formulation comprises one or more pesticides selected form the group of elementary sulfur, copper hydroxide, captan, tiophanate methyl, and tebuconazole. From among these the following combinations are preferred: sulfur/copper hydroxide, sulfur/tiophanate methyl/tebuconazole, copper hydroxide/- tebuconazole.

Besides the active substance and the carrier of the invention, the suspoemulsion formulation may comprise certain additives, such as emulsifier, antifoaming agent, tixotropizing agent, pH adjuster, pH stabilizer; dispersing agents, viscosity adjusting and protecting colloid, bactericide, antifreezer, loosener, solvent, and it is frequently applied, supplemented with water. In the suspoemulsions of the invention e.g. a modified ethoxylated fatty acid (such as the one commercialized under the name of Emulsion AG 18C) or an ethoxylated fatty acid (such as Alkamuls VO/2003) may be used as emulsifier; the antifoaming agent could be e.g. an aqueous silica emulsion (such as Emulsion RD); the tixotropizing agent could be e.g. a mineral additive (such as Attagel 50); the pH adjuster could be e.g. citric acid monohydrate; the pH stabilizer could be e. g. calcium carbonate (such as Violet chalk); the dispersing agent could be e.g. an ethoxylated tristyrylphenol phosphate (such as Soprophor FL), polyarylphosphate ester amine salt (POE, such as Emulson AG TRST), condensed alkyl naphthalene sulfonate (such as Madeol MW or Supragil MNS/90), ligninsulfonate ammonium salt (such as Borresperse AM 320) or polycarboxylate (such as Geropon T/36); the viscosity-adjusting and protecting colloid could be e.g. the xanthan gum (such as Keltrol AP); the bactericide could be e.g. sodium benzoate; the antifreezer could be e.g. a monopropylene glycol; the loosing agent could e.g. a silica additive (Sipernat 880); the trans-esterified derivatives of plant oils, such as rapeseed oil methyl ester or the sunflower oil methyl ester, are suitable solvents for dissolving the active substance; and as a further solvent e.g. 1-methoxy propanol can be used.

The formulation of the invention can be in a form of the wash oil compositions demonstrated in the examples. These may comprise a film-forming carrier containing a drying oil and modified ethoxylated fatty acid and lecithin emulsifier, and an oil for adjusting the consistency of the formed film. In the pesticide emulsion forming composition of the invention about 50 to 90 % by weight of film-forming oil, 0 to 20 % by weight of an oil for adjusting the consistency of the formed film, from more than 0 to 7 % by weight of lecithin and 8 to 18 % by weight of modified ethoxylated fatty acid emulsifier may be used for film formation.

### Production of the formulations of the invention

### Preparation of emulsion forming premix

The required emulsion forming premix is such that harmonizes with the other components of the suspoemulsion. In order to prepare this premix, first the lecithin - if used - while continuously stirred, is dissolved in the plant oil at 60°C in a temperature controlled duplicator, subsequently the emulsifiers are dissolved. Next the premix is cooled down and transferred into a temporary container. This premix can be used in itself as an emulsion forming composition, such as a wash oil composition.

### Preparation of suspoemulsions

Aqueous xanthan gum solution containing sodium benzoate is prepared. The swelling or solubilization of this is a time-consuming process.

Simultaneously, in a temperature-controlled duplicator equipped with a stirrer the dispersants are dissolved in a mixture of propylene glycol and water under continuous stirring, then the salt-type compounds and sodium benzoate are added. Subsequently, a part of the xanthan gum solution is added and stirred thoroughly. The active substances are added to the mixture stepwise and suspended by intense stirring.

Mineral additives, an antifoaming agent and - when a seed dressing agent is prepared - powder color is mixed to it, finally the oily emulsion forming premix is gradually added under intense mixing, and the mixture is passed through a disaggregator.

### Grinding procedures

Pre-grinding is performed in mills with emery discs in two steps. The suspoemulsion is feed through continuously operating in-line mills at a specified speed by using monopumps. The mills are equipped with a water-cooling jacket. After pre-grinding the particle size of the material is smaller than about 50 to 70 µm.

Fine grinding is achieved through one or more feeds in a bead water-cooled mill, where the grinding media is glass or ceramic beads with a size of 1 to 3 mm. In the suspoemulsion present in the grinding space the strong and fast stirrer of the mill keeps the beads moving. Due to the collision of the grinding media and its abrasive effect, the solid phase is ground to particles with an average size of 2 to 4 µm. After grinding, the suspoemulsion is transferred into a tank, where the xanthan gum solution is added under intense stirring to adjust the viscosity of the product. Then anti-foaming agent is added and the exact active substance content is adjusted with a small amount of water.

Subsequent to sampling and inspection, the product prepared in such a way will be packed.

### DESCRIPTION OF THE DRAWINGS

Figure 1: Electron microscopic image of a dried and polymerized spray droplet from formulation BVN-1 sprayed to an aluminum foil. In the droplet several thousand of fixed active substance particles are visible in 50-fold magnification.
Figure 2: Electron microscopic image of formulation BVN-1 on an aluminum foil, in 1000-fold magnification.
Figure 3: The image of the above sample in 3000-fold magnification.
Figure 4: The image of formulation BVN-2 sprayed on an aluminum foil, in 3000-fold magnification.
Figure 5: The image of formulation BVN-2 sprayed on a leaf, freeze-dried and coated with gold.
Figure 6: The image of formulation BVN-2 on the surface of a living leaf, no gold coating, in 1000-fold magnification.
Figure 7: The image of a particular part of the above formulation, in 2000-fold magnification.
Figure 8: The image of an area near the previous part, in 5000-fold magnification.
Figure 9: The image of formulation BVN-2 on a living leaf in 1000-fold magnification.
Figure 10: The image of a smaller part of the above leaf surface in 4000-fold magnification.
Figure 11: The image of the edge of a living grass in the original condition, with no gold coating or spray, in 500-fold magnification.
Figure 12: Image of formulation BVN-1 spray dried and coated with gold on a glass slide, in 35-fold magnification.
Figure 13: Image of droplets of various size present on another area of the above glass slide, in 200-fold magnification.
Figure 14: Image of formulation BVN-1 spray droplet coated with gold, on a glass slide, in 2000-fold magnification.
Figure 15: Image of formulation BVN-1 spray droplet coated with gold, on a glass slide, in 2500-fold magnification.
Figure 16: The image of the above gold-coated glass slide in 2500-fold magnification.
Figure 17: The image of the above gold-coated glass slide in 5000-fold magnification.
Figure 18: The image of formulation BVN-2 sprayed on a glass slide, coated with gold, in 1000-fold magnification.
Figure 19: The image of formulation BVN-3 droplets on a glass slide coated with gold, in 3 5-fold magnification.
Figure 20: Image of a part of the area shown above, in 250-fold magnification.
Figure 21: Image of the same area, in 1000-fold magnification.
Figure 22: Image of the BVN-4 spray droplet coated with gold, on a glass slide, in 200-fold magnification.
Figure 23: An image of the edge of a larger droplet of the above preparation, in 200-fold magnification.
Figure 24: The image of individual oil droplets present in the area between the spray droplets of formulation BVN-4, in 200-fold magnification.
Figure 25: The image of figure 23 in 500-fold magnification.
Figure 26: Comparative light microscopic image showing formulation BVN-2 on the right side of the screen.

The following examples illustrate the invention.

### EXAMPLES

### Example 1

**Sulfur - copper-hydroxide suspoemulsion**

| Component | Composition (% by weight) |
|---|---|
| ventilated elementary sulfur | 23.0 |
| Cu(OH)₂ | 11.5 |
| Emulsion RD (aqueous silicone emulsion) | 0.8 |
| Attagel 50 (tixotropizing agent) | 0.5-1.0 |
| citric acid monohydrate | 0.2-0.4 |
| Emulson AG 18C (modified ethoxylated fatty acid) | 2.0-3.0 |
| Emulson AG TRST (POE, polyaryl phosphate ester amine salt) | 1.5-2.5 |
| Keltrol AP (xanthan gum) | 0.05-0.15 |
| Madeol MW (condensed alkyl naphthalene sulfonate) | 0.6-1.5 |
| sunflower oil | 15.0-23.0 |
| rapeseed oil | 0-8.0 |
| Na-benzoate | 0.03-0.08 |
| monopropylene-glycol | 3.0-7.0 |
| Sipernat 22 (silica additive) | 0.2-0.9 |
| Lecico F600 IPM (plant lecithin) | 0.3-1.0 |
| water | to 100 |

### Example 2

**Sulfur - copper-hydroxide suspoemulsion**

| Component | Composition (% by weight) |
|---|---|
| ventilated elementary sulfur | 15-30 |
| Cu(OH)₂ | 6-15 |
| Emulsion RD (aqueous silicone emulsion) | 0.8 |
| Attagel 50 (tixotropizing agent) | 0.5-1.0 |
| citric acid monohydrate | 0.2-0.4 |
| Emulson AG 18C (modified ethoxylated fatty acid) | 2.0-3.0 |
| Emulson AG TRST (POE, polyaryl phosphate ester amine salt) | 1.5-2.5 |
| Keltrol AP (xanthan gum) | 0.05-0.15 |
| Madeol MW (condensed alkyl naphthalene sulfonate) | 0.6-1.5 |
| sunflower oil | 15.0-23.0 |
| rapeseed oil | 0-8.0 |
| Na-benzoate | 0.03-0.08 |
| monopropylene-glycol | 3.0-7.0 |
| Sipernat 22 (silica additive) | 0.2-0.9 |
| Lecico F600 IPM (plant lecithin) | 0.3-1.0 |
| water | to 100 |

### Example 3

**Captan suspoemulsion**

| Component | Composition (% by weight) |
|---|---|
| captan | 31.0 |
| Emulsion RD (aqueous silicone emulsion) | 0.5-1.0 |
| Geropon T/36 (polycarboxylate) | 1.0-3.0 |
| Emulson AG 18C (modified ethoxylated fatty acid) | 1.0-3.0 |
| Emulson AG TRST (POE, polyaryl phosphate ester amine salt) | 1.0-4 |
| Keltrol AP (xanthan gum) | 0.05-0.15 |
| monopropylene-glycol | 3.0-9.0 |
| Violet chalk (calcium carbonate) | 2.0-4.0 |
| sunflower oil | 5.0-20.0 |
| rapeseed oil | 0-8.0 |
| Na-benzoate | 0.02-0.1 |
| Sipernat 880 (silica additive) | 1.0-2.5 |
| Lecico F600 IPM (plant lecithin) | 0.3-3.0 |
| water | to 100 |

### Example 4

**Captan suspoemulsion**

| Component | Composition (% by weight) |
|---|---|
| Captan | 18-40 |
| Emulsion RD (aqueous silicone emulsion) | 0.5-1.0 |
| Geropon T/36 (polycarboxylate) | 1.0-3.0 |
| Emulson AG 18C (modified ethoxylated fatty acid) | 1.0-3.0 |
| Emulson AG TRST (POE, polyaryl phosphate ester amine salt) | 1.0-4 |
| Keltrol AP (xanthan gum) | 0.05-0.15 |
| monopropylene-glycol | 3.0-9.0 |
| Violet chalk (calcium carbonate) | 2.0-4.0 |
| sunflower oil | 5.0-20.0 |
| rapeseed oil | 0-8.0 |
| Na-benzoate | 0.02-0.1 |
| Sipernat 880 (silica additive) | 1.0-2.5 |
| Lecico F600 IPM (plant lecithin) | 0.3-3.0 |
| water | to 100 |

### Example 5

**Copper suspoemulsion**

| Component | Composition (% by weight) |
|---|---|
| Cu(OH)₂ | 13.0-30.0 |
| Emulsion RD (aqueous silicone emulsion) | 0.3-1.2 |
| Attagel 50 (mineral additive) | 0.5-2.0 |
| citric acid monohydrate | 0-1.4 |
| Emulson AG 18C (modified ethoxylated fatty acid) | 1.5-4.0 |
| Emulson AG TRST (POE, polyaryl phosphate ester amine salt) | 1.5-3.0 |
| Keltrol AP (xanthan gum) | 0.02-0.1 |
| Madeol MW (condensed alkyl naphthalene sulfonate) | 0.5-2.0 |
| monopropylene-glycol | 3.0-9.0 |
| linseed oil | 12.0-21.0 |
| rapeseed oil | 0-8.0 |
| Na-benzoate | 0.02-0.1 |
| Lecico F600 IPM (plant lecithin) | 0.3-2.0 |
| Sipernat 22 (silica additive) | 0.3-1.3 |
| water | to 100 |

### Example 6

**Copper hydroxide suspoemulsion (formulation BNV-1)**

| Component | Composition (% by weight) |
|---|---|
| Cu(OH)₂ | 24.0 |
| Emulsion RD (aqueous silicone emulsion) | 0.8 |
| Attagel 50 (mineral additive) | 1.5 |
| citric acid monohydrate | 0.8 |
| Emulson AG 18C (modified ethoxylated fatty acid) | 2.9 |
| Emulson AG TRST (POE, polyaryl phosphate ester amine salt) | 2.0 |
| Keltrol AP (xanthan gum) | 0.04 |
| Madeol MW (condensed alkyl naphthalene sulfonate) | 0.8 |
| monopropylene-glycol | 6.0 |
| sunflower oil | 20.4 |
| Sodium benzoate | 0.04 |
| Sipernat 22 (silica additive) | 0.8 |
| Lecico F600 IPM (plant lecithin) | 0.72 |
| water | to 100 |

### Example 7

**Copper hydroxide suspoemulsion**

| Component | Composition (% by weight) |
|---|---|
| Cu(OH)₂ | 15-35 |
| Emulsion RD (aqueous silicone emulsion) | 0.5-1.2 |
| Attagel 50 (mineral additive) | 0.5-1.8 |
| citric acid monohydrate | 0.3-1.2 |
| Emulson AG 18C (modified ethoxylated fatty acid) | 2.0-5.0 |
| Emulson AG TRST (POE, polyaryl phosphate ester amine salt) | 1.3-3.0 |
| Keltrol AP (xanthan gum) | 0.02-0.1 |
| Madeol MW (condensed alkyl naphthalene sulfonate) | 0.5-1.5 |
| monopropylene-glycol | 3.0-9.0 |
| sunflower oil | 15.0-28.0 |
| rapeseed oil | 0-8.0 |
| Na-benzoate | 0.02-0.1 |
| Sipernat 22 (silica additive) | 0.5-1.5 |
| Lecico F600 IPM (plant lecithin) | 0.3-1.5 |
| water | to 100 |

### Example 8

**Sulfur - tiophante methyl - tebuconazole suspoemulsion (formulation BVN-2)**

| Component | Composition (% by weight) |
|---|---|
| Soprophor FL (ethoxylated tristyrylphenol phosphate ) | 2.0 |
| 1,2-propylene glycol | 4.6 |
| Supragil MNS/90 (condensed alkylnaphtalene sulfonate) | 1.5 |
| Borresperse AM 320 (Ammonium Lignosulfonate ) | 0.7 |
| sodium benzoate | 0.04 |
| Keltrol AP (xanthan gum) | 0.12 |
| ventilated elementary sulfur (99.9%) | 36.04 |
| tiophanate methyl (97%) | 6.19 |
| tebuconazole (97%) | 3.10 |
| Sipernat 22 (silica additive) | 0.30 |
| sunflower oil | 17 |
| Alkamuls VO/2003 (ethoxylated fatty acid) | 2.4 |
| Lecico F600 IPM (soy lecithin) | 0.6 |
| Geronol FF4 (blends) | 0.8 |
| Emulsion RD (aqueous silicone emulsion) | 0.8 |
| ion exchanged water | to 100 |

### Reference example 9

### Sulfur - thiophanate methyl - tebuconazole suspension (formulation BVN-3)

The formulation of example 8, but without sunflower oil.

### Example 10

**Seed dressing suspoemulsion**

| Component | Composition (% by weight) |
|---|---|
| Cu(OH)₂ | 13.0-30.0 |
| tebuconazole | 1.0-8.0 |
| Emulsion RD (aqueous silicone emulsion) | 0.4-1.5 |
| Emulson AG 18C (modified ethoxylated fatty acid) | 1.0-3.5 |
| Emulson AG TRST (POE, polyaryl phosphate ester amine salt) | 1.0-4.0 |
| Keltrol AP (xanthan gum) | 0.02-0.1 |
| monopropylene-glycol | 3.0-10.0 |
| Borresperse AM 320 (ammonium lignosulfonate) | 1.0-4.0 |
| Na-benzoate | 0.02-0.1 |
| citric acid monohydrate | 0.3-1.2 |
| Versalred F6 RT (marking dye) | 0.8-4.0 |
| Lecico F600 IPM (plant lecithin) | 0.3-1.5 |
| Sipernat 22 (silica additive) | 0.2-1.0 |
| sunflower oil | 10.0-30.0 |
| rapeseed oil | 0-8.0 |
| water | to 100 |

### Example 11

**Wash oil composition (formulation BVN-4)**

| Component | Composition (% by weight) |
|---|---|
| sunflower oil | 85.0 |
| Emulson AG 18C (modified ethoxylated fatty acid) | 12.0 |
| Lecico F600 IPM (plant lecithin) | 3.0 |

### Example 12

**Wash oil composition**

| Component | Composition (% by weight) |
|---|---|
| sunflower oil | 50-90 |
| rapeseed oil | 0-20 |
| Emulson AG 18C (modified ethoxylated fatty acid) | 8-18 |
| Lecico F600 IPM (plant lecithin) | 1-7 |

### Reference example 13

**Wash oil composition**

| Component | Composition (% by weight) |
|---|---|
| sunflower oil | 78 |
| rapeseed oil | 10 |
| Emulson AG 18C (modified ethoxylated fatty acid) | 12 |

### Electron microscopic examinations

For studying surface structures, scanning electronmicroscope was used. This device allows monitoring the activity of sprays even on leaf surfaces, i.e. provides an opportunity to detect the presence of a certain active substance (such as captan, copper (II) hydroxide etc.) and to examine the quality of the films fixing them. Each preparation method provides for the monitoring of a different property. Therefore, the properties of the coating can be planned on observational basis.

Electron microscopic studies were performed on formulations of example 6 (BVN-1), example 8 (BVN-2), example 9 (BVN-3) and example 11 (BVN-4). As a control, leaves present in naturally occurring form were used with no spraying. Images were taken in scanning mode with an accelerating voltage of 25 kV in most cases.

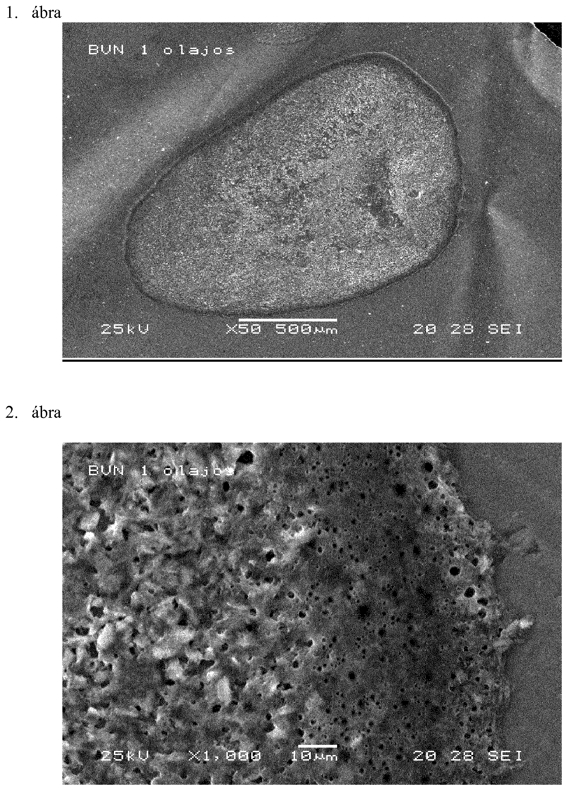

Figure 1 shows an electron microscopic image of a dried and polymerized spray droplet of formulation BVN-1 (oily formulation containing copper hydroxide active substance) sprayed to an aluminum foil. In the droplet several thousand of fixed active substance particles are visible in 50-fold magnification.

Figure 2 shows an electron microscopic image of formulation BVN-1 on an aluminum foil, in 1000-fold magnification. The layer is thicker on the edge of the droplet, therefore it is more visible. In this magnification it is significantly visible that the solidified oil film ruptures in vacuum thus facilitating the release of a small amount of volatile components. Curved and round holes characteristic to elastic materials are visible with having no ruptures in them.

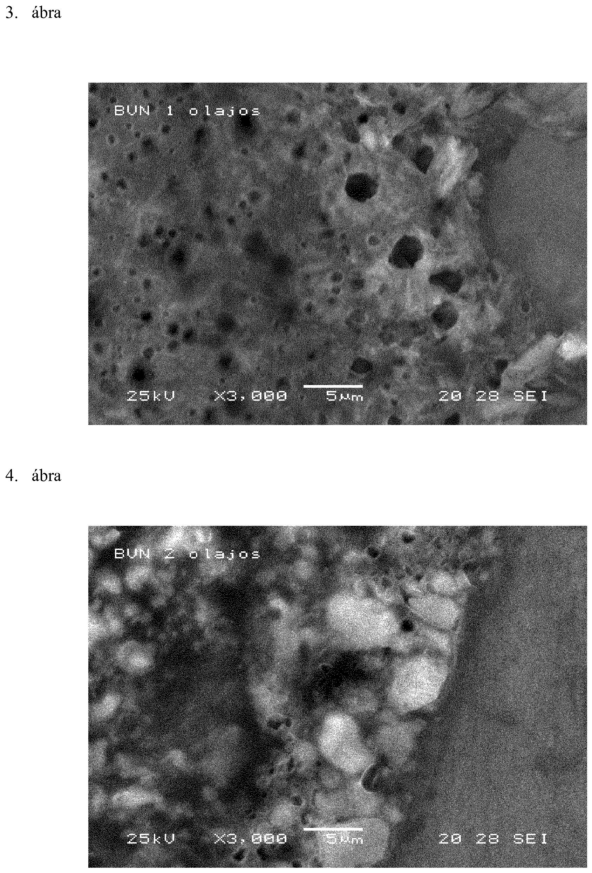

Figure 3 shows the image of the previous sample in 3000-fold magnification, where solid particles of the active substance can be seen through the layer and the round holes mentioned above are also highly visible.

Figure 4 shows the image of formulation BVN-2 (oily formulation with three active substances) sprayed on an aluminum foil, in 3000-fold magnification. The particles show through the solidified oil layer (with no gold coating on it) having a slightly diffuse borderline inasmuch as the electron beam penetrated the exceptionally fine layer and where there is a clearer vision into the depth of the solidified oil layer, the holes having faint but clearly visible rims come into view. These holes are clearly visible above the particles and they are definitely of round shape.

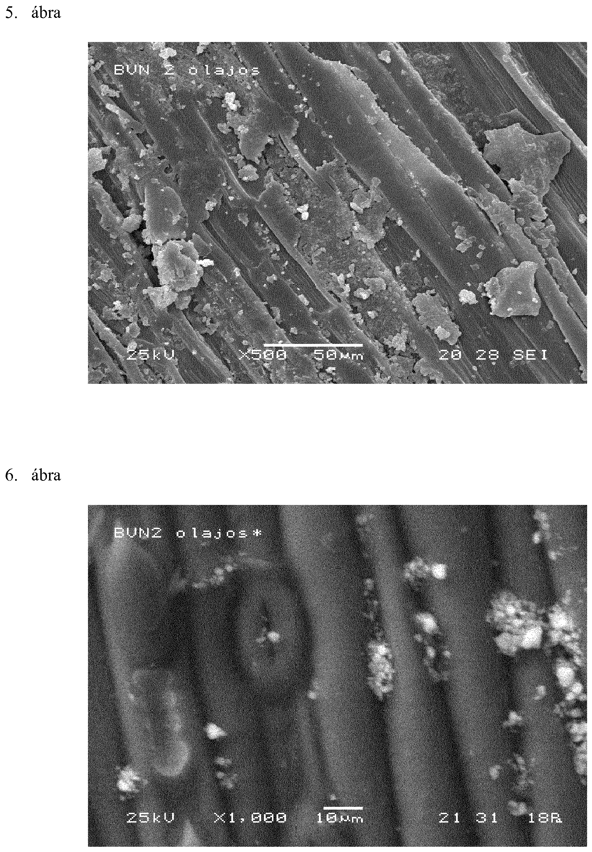

Figure 5 shows the image of formulation BVN-2 sprayed on a leaf, then freeze-dried and coated with gold. Due to the gold coating, this sample is absolutely impenetrable, however the surface appears sharply and with high contrast in the image. Since the fibrous and veinose plant surface became dehydrated and shrunk because of freeze-drying, the lamellar surface layers coming off from the plant surface can be observed. In this 500-magnification image the particles of the active substance seem to be very small.

Figure 6 shows the image of formulation BVN-2 on the surface of a living leaf, with no gold coating, 1000-fold magnification. The image shows the cells forming the plant skin and a stomata, furthermore, it also depicts the dried spray containing the active substance particles which is present in the grooves between cells. The oil film is hardly visible in this image (no gold coating was applied), however the appearance of the surface is more natural.

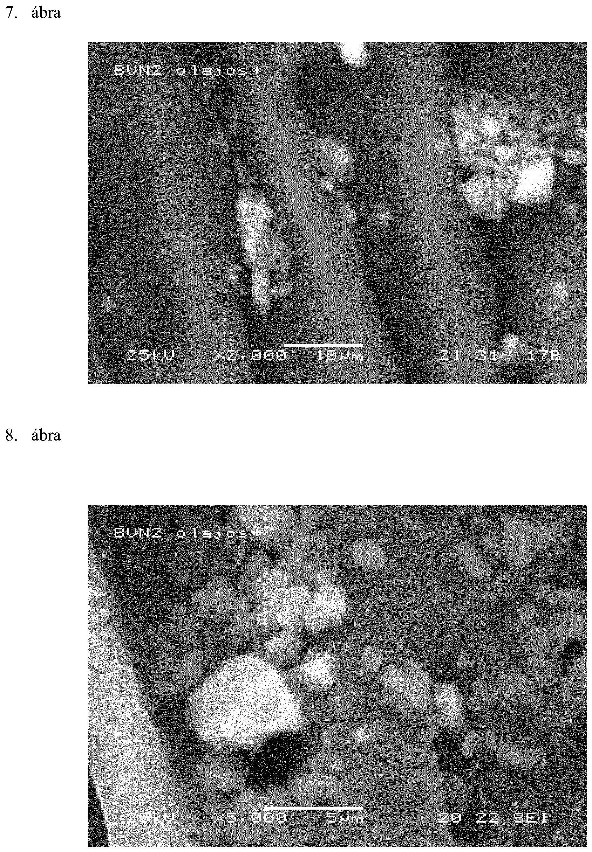

Figure 7 shows an accentuated part of the previous picture in 2000-fold magnification.

Figure 8 shows an area near to previous part, in 5000-fold magnification. In this image, which was taken of a living leaf with no gold coating film on it, film-like structures appearing around the particles can already be observed.

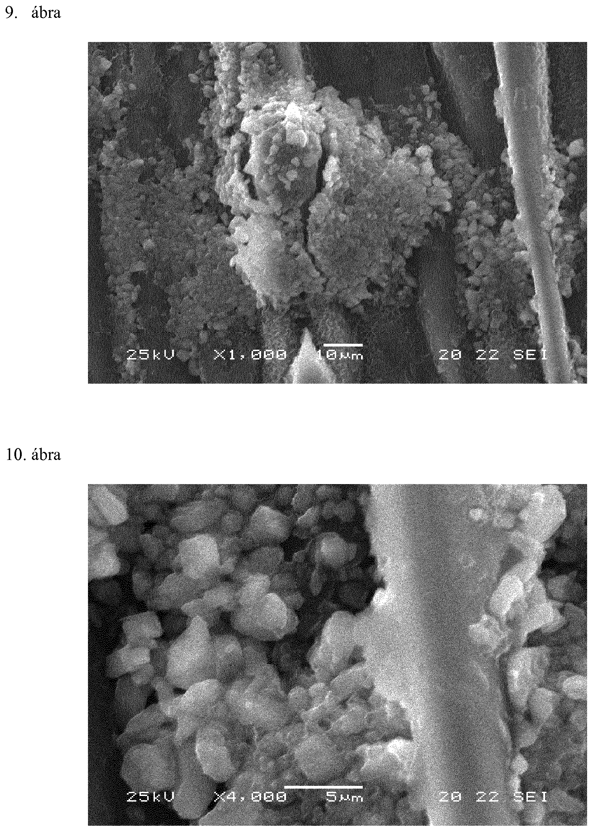

Figure 9 shows the image of formulation BVN-2 of a living leaf in 1000-fold magnification. In this image a part of a relatively large dried spray drop is visible between the plant leaf cells and the microvessels. Here the layer is thick and its rupture at the bend of the leaf blade is clearly visible, while at the same time sediment of the film-forming composition binding together the particles of the active substance can also be observed.

Figure 10 shows the image of a smaller part of the above leaf surface in 4000-fold magnification. Although this preparation contains a living leaf surface with no gold coating applied on it, the thin film layer containing small holes is also visible at the interface of the plant surface and the particle of active substance.

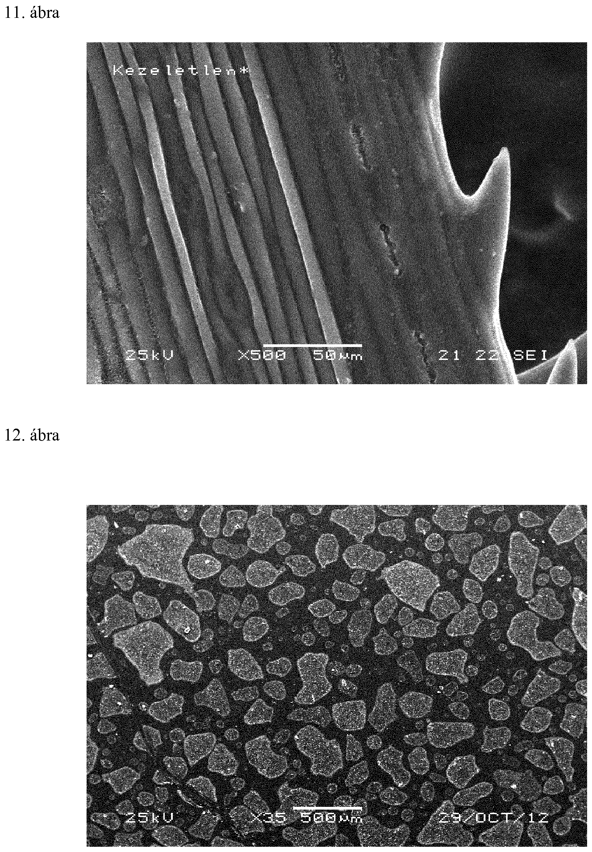

Figure 11 shows the image of the edge of a living grass in its original condition, with no gold coating or spray on it, in 500-fold magnification.

Figure 12 shows the image of the spray of formulation BVN-1 dried and coated with gold on a glass slide, in 35-fold magnification. The image shows a uniform particle distribution present in the droplets. Furthermore, it is visible that due to the effect of surface tension, particles already with a size of about 100 micron or smaller form a circle.

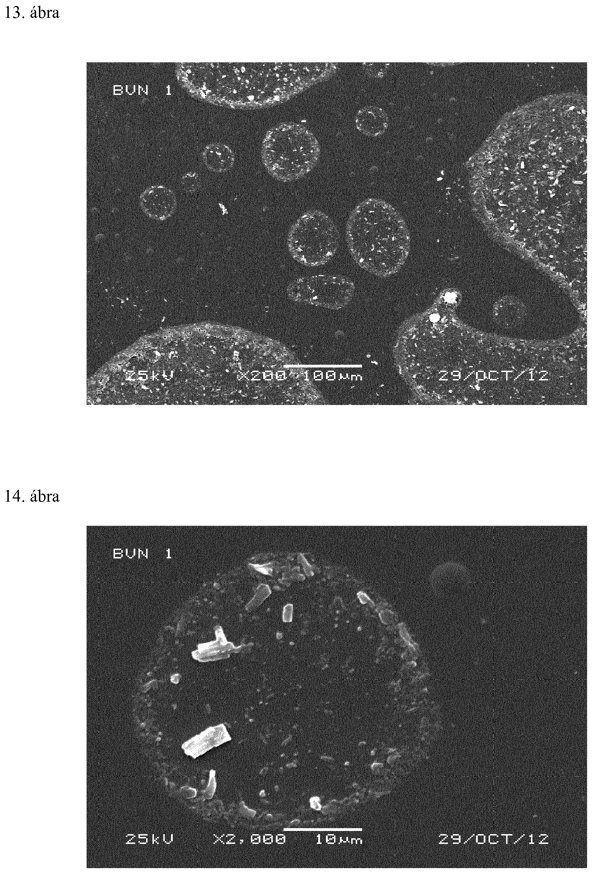

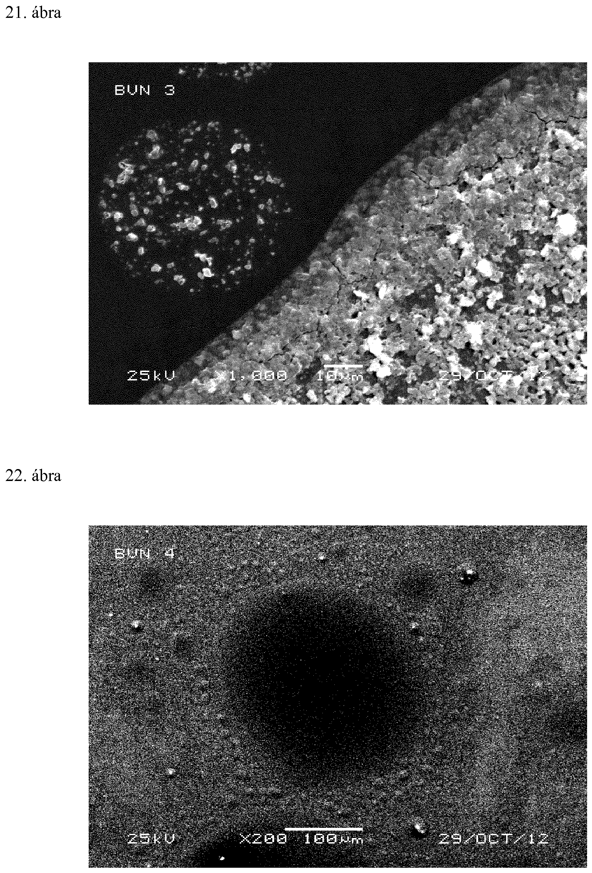

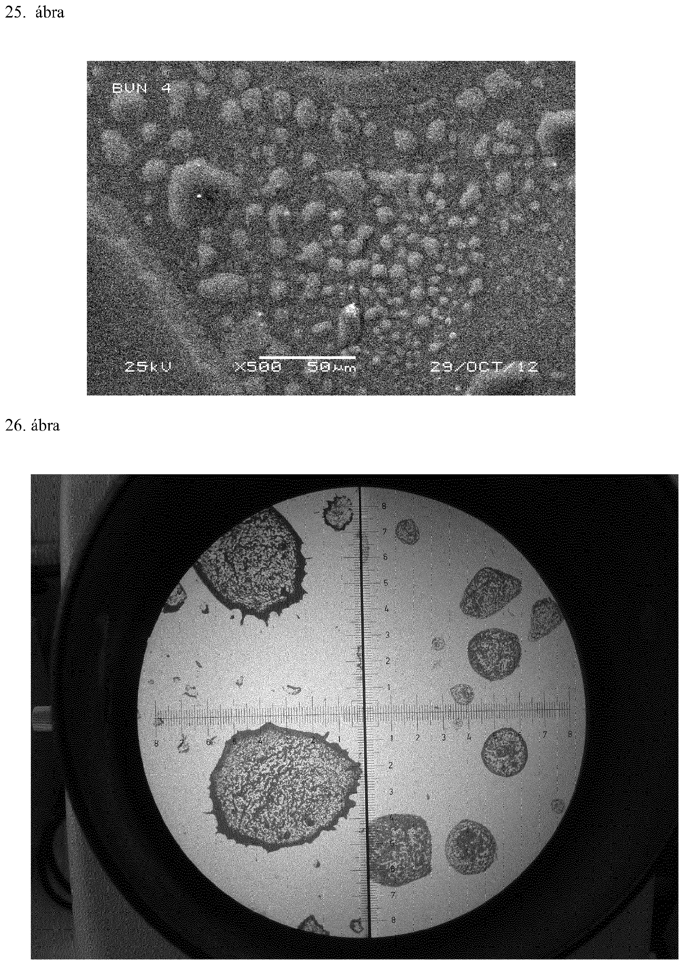

Figure 13 shows the image of droplets of various sizes present in another area of the above glass slide, in 200-fold magnification. In this image, in the various sized droplets the active substance particles are individually visible and it can also be observed that the edges of the droplets became thicker when dried and the smaller droplets are of round shape. Relative to the those mentioned above, it is an observation of great significance that simultaneously with the decrease in spray droplets the number of particles falls rapidly. If the drops are suitably small, only one single particle of active substance or a single drop of oil can be found in the spray drop. In such cases, when the water has evaporated, individual active substance particles and individual oil drops should be visible on the slide. This image depicts the above case really well. These small droplets are formed in such way that the high speed collisions result in small droplets, even micro droplets are formed from the spray drops, and these small droplets will also adhere to the surface. This is clearly visible in figure 22 and also on the left side of figure 26 (image taken with Projectina light microscope).

Figure 14 shows an image of formulation BVN-1 spray droplet coated with gold, on a glass slide, in 2000-fold magnification. The image shows a smaller spray droplet with a size of approximately 50 µm containing numerous but a countable number of particles of the active substance. Thickening is also clearly visible on the edge of this droplet and outside the spray droplet an individual dried oil droplet can be found on the glass surface.

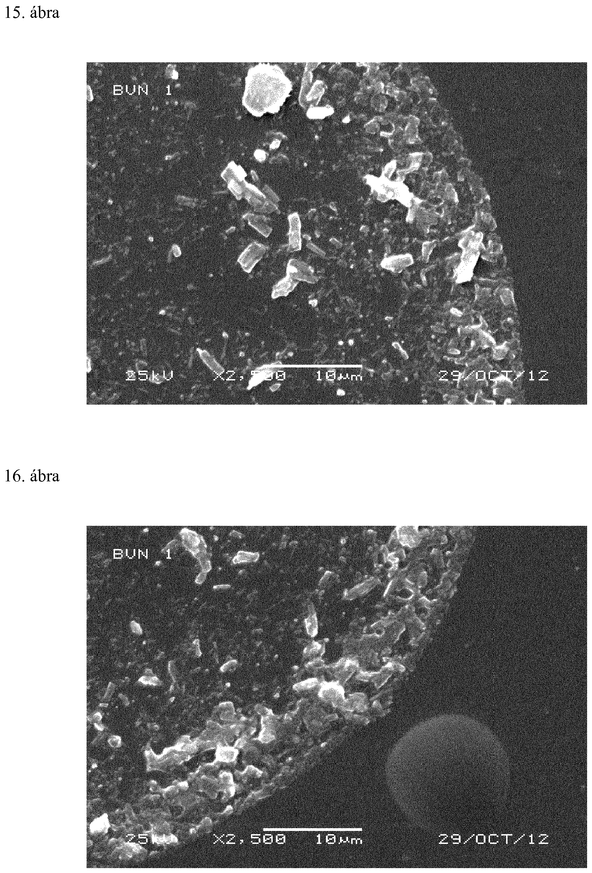

Figure 15 shows an image of formulation BVN-1 spray droplet coated with gold, on a glass slide, in 2500-fold magnification. This image is taken of a larger droplet and the coating at the edge of the droplet can be better observed. The film connecting the particles is clearly visible here.

Figure 16 shows the image of the above gold-coated glass slide in 2500-fold magnification. Here, the film connecting droplets and several holes in the film can also be observed. Additionally, an individual, dried oil drop with a size of approximately 10 µm is also visible in this image.

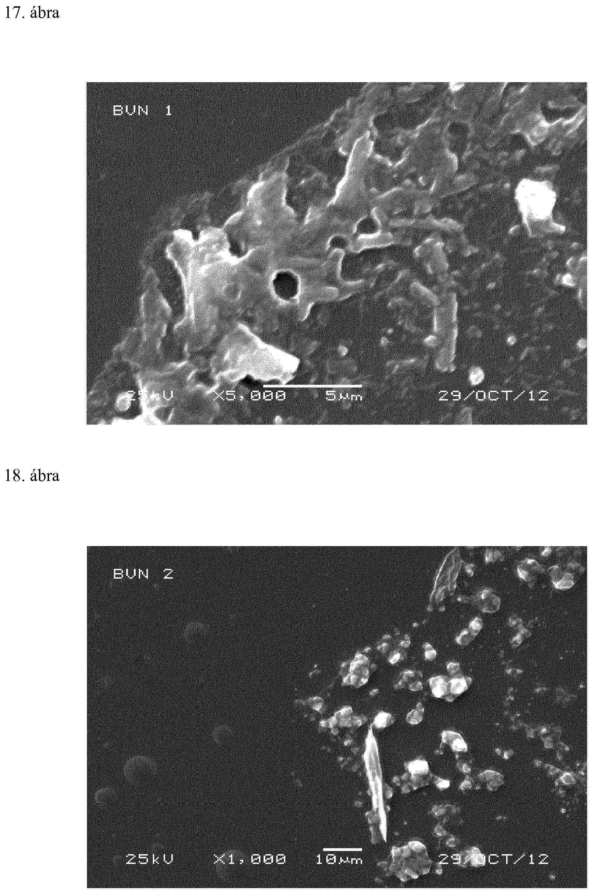

Figure 17 shows the image of the above gold-coated glass slide in 5000-fold magnification. Here, the sediment-like polymer film covering the active substance particles are clearly visible on the edge of the droplet. Here, the characteristic features of the film may be observed the best.

Figure 18 shows the image of the spray of formulation BVN-2 sprayed on a glass slide, coated with gold, in 1000-fold magnification. In this image a polymer film binding the active substance particles together in the droplets, and on other parts of the glass slide, several solitary oil drops can be seen.

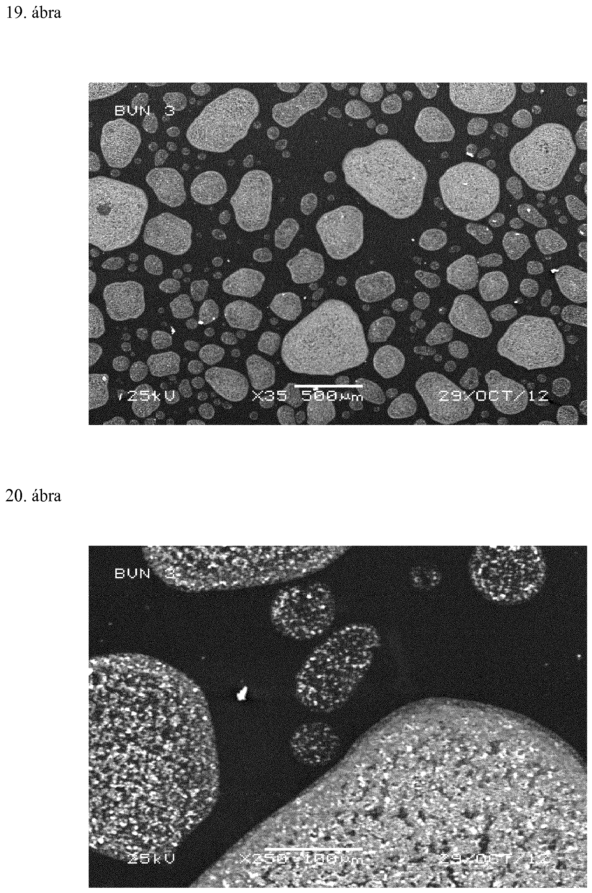

Figure 19 shows the image of the spray droplets of formulation BVN-3 (oil free spray with three active substances) on a glass slide, coated with gold, in 35-fold magnification (the formulation of BVN Növényvédö Kft.). The image shows a uniform particle distribution present in spray droplets. Here it is also visible that the smaller droplets are of circular shape.

Figure 20 shows an image of a part of the area of the previous image, in 250-fold magnification, where a smaller number of particles are present in the small droplets and a few particles of active substance also appear. However, no traces of oil drops can be observed.

Figure 21 shows the image of the same area in 1000-fold magnification. Since the applied formulation does not contain any film-forming substances but it comprises watersoluble dispersants which do not evaporate in vacuum, these dispersants become highly concentrated at the edge of the droplet. The dispersants constitute a rigid layer and due to its shrinkage during drying, on the rigid surface of the glass a characteristic fracture pattern is formed. This phenomenon can mainly be observed with large drops.

Figure 22 shows an image of a dried, polymerized spray droplet of the formulation BVN-4 (emulsifier-containing oily formulation) on a glass slide, coated with gold, in 200-fold magnification. The gold-coated glass slide facilitates the study of the oily additive layer in itself. In the middle of the image a larger spray drop is visible together with the surrounding small oil drops. The contrast of both this and the following photograph is smaller, however the image is characteristic. Considering the fact that this is a preparation which contains no active substance, the ratio of oil is about 5-times higher in this spray droplet compared with other samples. Therefore, the number of isolated oil drops is relatively high.

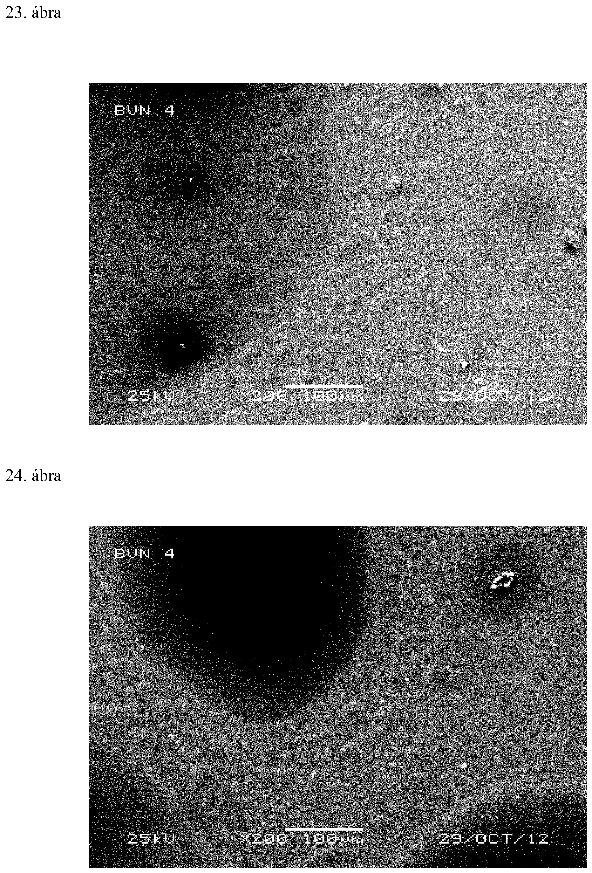

Figure 23 shows an image taken of the edge of a larger droplet of the above preparation in 200-fold magnification. Besides the spray droplet, the separate oil drops are clearly visible, although the partly gelatinized oil drops confluently cover the surface in the large spray droplet, but their adjacent edges are still detectable. This is the first phase of the polymerization process.

Figure 24 shows the image of individual oil droplets present in the area between the spray droplets of formulation BVN-4 in 200-fold magnification. Details inside big-sized droplets are not visible since the actual contrast and illumination were adjusted to small droplets. In this case a completely polymerized and solidified sample was coated with gold.

Figure 25 shows the image of figure 23 in 500-fold magnification. In this image a multitude of droplets can be seen. Droplets freshly sprayed to the glass slide were initially in a liquid state, then they lost their water content and became polymerized while keeping their shape. Thus, these droplets are composed of polymer macromolecules, which are in the form of film, therefore they do not evaporate in a vacuum as small molecules do, and their surface can be coated with gold. The smoothness of the glass surface enables these small elevations to be seen. A scanning electronmicroscope is perfectly capable of scanning the gold-coated surface, although in this case the contrast is very poor.

Figure 26 shows a comparative image taken with a traditional light microscope (Projectina). On the left side of the comparative image visibly rough dried spray droplets of commonly used Kén WG (Sulfur WG) is shown, where due to its big mass, the edge of the droplet has a thick and wide rim. On the right-hand side of the field the dried droplet of the formulation according to example 8 (BVN-2, oily formulation with three active substances) can be observed. In relation with this it should be noted that various adjuvants are used in several products. Here, it is clearly unnecessary. The image clearly shows that the sample spray is of a fine-droplet consistency even without the application of any adjuvant.

## Claims

1. Use of a polymerizing film-forming carrier in pesticide formulations for treating plants, which carrier consists of the following components:
- a film forming oil, which is a drying oil selected from the group of sunflower oil, linseed oil, hemp seed oil, grape seed oil, tree oil or a mixture thereof and
- lecithin,
wherein the mass ratio of lecithin to the plant oil(s) is in the range from about 1:5 to about 1:100.

2. The use of the polymerizing film-forming carrier according to claim 1, wherein said polymerizing film-forming carrier consists of the components according to claim 1 and as further component, an oil for adjusting the consistency of the formed film, which oil is a non-drying oil selected from the group of rapeseed oil, palm oil, olive oil, castor oil or a mixture thereof,
wherein the mass ratio of drying oil to non-drying oil is minimum 3:1 and the mass ratio of lecithin to the plant oils is in the range from about 1:5 to about 1:100.

3. The use of the polymerizing film-forming carrier according to claim 1 or 2 for forming a well-adhering pesticide film for protecting oxygen sensitive active substances, for releasing active substance in controllable manner and/or for facilitating absorption of systemic pesticides.

4. Pesticide formulation which converts into solid film coating on the surface of plant and/or its soil or other growth media, which formulation is a suspoemulsion consisting of the polymerizing film-forming carrier as defined in claim 1 or 2 and one or more pesticides and optional additives selected from the group of emulsifier, antifoaming agent, tixotropizing agent, pH adjuster, pH stabilizer, dispersing agents, viscosity-adjusting and protecting colloid, bactericide, antifreezer, loosener and solvent(s) or a mixture thereof, and supplemented with water, with the proviso that mineral oil is not present.

5. The pesticide suspoemulsion according to claim 4 wherein the emulsifier is an ethoxylated fatty acid or a modified ethoxylated fatty acid, the antifoaming agent is aqueous silica emulsion; the tixotropizing agent is a mineral additive; the pH adjuster is citric acid monohydrate; the pH stabilizer is calcium carbonate; the dispersing agent is ethoxylated tristyrylphenol phosphate, polyarylphosphate ester amine salt, condensed alkyl naphthalene sulfonate, ligninsulfonate ammonium salt or polycarboxylate; the viscosity-adjusting and protecting colloid is xanthan gum; the bactericide is sodium benzoate; the antifreezer is monopropylene glycol; the loosing agent is silica additive; the solvent is a trans-esterified derivatives of plant oil, preferably rapeseed oil methyl ester or sunflower oil methyl ester; and/or as further solvent 1-methoxy propanol is present.

6. The pesticide suspoemulsion according to claim 4, wherein the said one or more pesticides are selected from the group of elementary sulfur, copper hydroxide, copper oxychloride, copper oxide, basic copper sulfate, captan, tebuconazole and thiophanate methyl.

7. The pesticide suspoemulsion according to any of claims 4 to 6, which pesticide suspoemulsion consists of 5 to 30 % by weight of film forming oil according to claim 1, 0.3 to 3 % by weight of lecithin according to claim 1, 0 to 8 % by weight of oil for adjusting the consistency of the formed film according to claim 2, and 1 to 5 % by weight of an ethoxylated fatty acid emulsifier or a modified ethoxylated fatty acid emulsifier, each based on the total weight of the pesticide suspoemulsion; and optional additives and one or more pesticides.

8. The pesticide suspoemulsion according to claim 4 to 7, which is seed dressing, to which powder color is mixed.

9. Wash oil composition consisting of 50 to 90 % by weight of film forming oil according to claim 1, from more than 0 to 7 % by weight of lecithin according to claim 1, 0 to 20 % by weight of oil for adjusting the consistency of the formed film according to claim 2, and 8 to 18 % by weight of modified ethoxylated fatty acid emulsifier, each based on the total weight of the wash oil composition.

10. Method for forming polymerized pesticide film, **characterized in that** the pesticide formulation according to any of claims 4 to 9 is applied to the surface of plant and/or its soil or other growth media, and by exposing the plant oil(s) present in the formulation to environmental oxygen, is allowed to polymerize for a period from a few hours to one day, to obtain the polymerized pesticide film.

11. Method of claim 10, **characterized in that** the surface of plant, where the formulation is applied to, is the surface of root, stem or leaf, or seed or soil or other growth media.

12. The use of the film-forming carrier according to claim 1 or 2 together with trans-esterified plant oil(s) and optionally other solvent(s) for controlling the pesticide dissolving capacity of the film layer.

## Patentansprüche

1. Verwendung eines polymerisierenden filmbildenden Trägerstoffes in pestiziden Zusammensetzungen für die Behandlung von Pflanzen, welcher Trägerstoff aus den folgenden Bestandteilen besteht:
- ein filmbildendes Öl, welches ein abtrocknendes Öl, ausgewählt aus der Gruppe von Sonnenblumenöl, Leinsamenöl, Hanföl, Traubenkernöl, Baumöl oder eine Mischung dieser, ist, und
- Lecithin,
wobei das Gewichtsverhältnis vom Lecithin zum Pflanzenöl im Bereich von etwa 1:5 bis etwa 1:100 liegt.

2. Verwendung eines polymerisierenden filmbildenden Trägerstoffes nach Anspruch 1, wobei der polymerisierende filmbildende Trägerstoff aus den Bestandteilen nach Anspruch 1 und als weiterem Bestandteil aus einem Öl zur Einstellung der Konsistenz des gebildeten Films besteht, welches Öl ein nicht abtrocknendes Öl, ausgewählt aus der Gruppe von Rapsöl, Palmöl, Olivenöl, Rizinusöl oder eine Mischung dieser, ist,
wobei das Gewichtsverhältnis vom abtrocknenden Öl zum nicht abtrocknenden Öl bei mindestens 3:1 und das Gewichtsverhältnis vom Lecithin zum Pflanzenöl im Bereich von etwa 1:5 bis etwa 1:100 liegen.

3. Verwendung eines polymerisierenden filmbildenden Trägerstoffes nach Anspruch 1 oder 2 zur Bildung eines gut anhaftenden pestiziden Films zum Schutz sauerstoffsensitiver Wirkstoffe, zur Freisetzung der Wirkstoffe in kontrollierbarer Weise und/oder zur Unterstützung der Absorption von systemischen Pestiziden.

4. Eine pestizide Zusammensetzung, welche sich in einen festen Film umwandelt, der die Oberfläche der Pflanzen und/oder ihren Boden oder andere Wachstumsmedien beschichtet, welche Zusammensetzung eine Suspoemulsion ist, die aus dem polymerisierenden filmbildenden Trägerstoff nach Anspruch 1 oder 2 und einem oder mehreren Pestiziden und gegebenenfalls Zusatzstoffen, ausgewählt aus der Gruppe von Emulgator, Antischaummittel, Tixotropierungsmittel, pH-Einsteller, pH-Stabilisatoren, Dispergatoren, Viskositäts-Einsteller und Schutzkolloiden, Bakteriziden, Gefrierschutzmitteln, Lockerer und Lösungsmitteln oder einer Mischung dieser, besteht und mit Wasser ergänzt ist, mit der Voraussetzung, dass kein Erdöl vorhanden ist.

5. Die pestizide Suspoemulsion nach Anspruch 4, wobei der Emulgator eine ethoxylierte Fettsäure oder eine modifizierte ethoxylierte Fettsäure, das Antischaummittel eine wässrige Silika-Emulsion; das Tixotropierungsmittel ein mineralischer Zusatzstoff; der pH-Einsteller Zitronensäure-Monohydrat; der pH-Stabilisator Kalziumkarbonat; der Dispergator ethoxyliertes Tristyrylphenolphosphat, Polyarylphosphatester-Aminsalz, kondensiertes Alkylnaphthalensulfonat, Ligninsulfonat-Ammoniumsalz oder Polykarboxylat; der Viskositäts-Einsteller und das Schutzkolloid Xanthan Gum; das Bakterizid Natriumbenzoat; das Gefrierschutzmittel Monopropylenglykol; der Lockerer Silika Zusatzstoff; das Lösungsmittel ein transesterifiziertes Derivat von Pflanzenöl, bevorzugt Rapsöl-Methylester oder Sonnenblumenöl-Methylester ist; und/oder als weiteres Lösungsmittel 1-Methoxypropanol verwendet ist.

6. Die pestizide Suspoemulsion nach Anspruch 4, wobei das ein oder mehrere Pestizide aus der Gruppe von elementarem Schwefel, Kupferhydroxid, Kupferoxychlorid, Kupferoxid, basischem Kupfersulfat, Kaptan, Tebukonazol und Thiophanat-methyl ausgewählt ist.

7. Die pestizide Suspoemulsion nach einem der Ansprüche 4 bis 6, welche pestizide Suspoemulsion aus 5 bis 30 Gewichts% filmbildendem Öl nach Anspruch 1, 0,3 bis 3 Gewichts% Lecithin nach Anspruch 1, 0 bis 8 Gewichts% Öl zur Einstellung der Konsistenz des gebildeten Films nach Anspruch 2, und 1 bis 5 Gewichts% ethoxyliertem Fettsäure-Emulgator oder modifiziertem ethoxyliertem Fettsäure-Emulgator, jeweils auf dem Gesamtgewicht der pestiziden Suspoemulsion basierend; und gegebenenfalls aus Zusatzstoffen und einem oder mehreren Pestiziden besteht.

8. Die pestizide Suspoemulsion nach einem der Ansprüche 4 bis 7, welche ein Beizmittel ist, dem Pulverfarbe zugemischt ist.

9. Waschölzusammensetzung, bestehend aus 50 bis 90 Gewichts% filmbildendem Öl nach Anspruch 1, von mehr als 0 bis 7 % Gewichts% Lecithin nach Anspruch 1, 0 bis 20 Gewichts% Öl zur Einstellung der Konsistenz des gebildeten Filmes nach Anspruch 2, und 8 bis 18 Gewichts% modifiziertem ethoxyliertem Fettsäure-Emulgator, jeweils auf dem Gesamtgewicht der Waschölzusammensetzung basierend.

10. Verfahren zur Bildung eines polimerisierten pestiziden Films, **dadurch gekennzeichnet, dass** die pestizide Zusammensetzung nach einem der Ansprüche 4 bis 9 an der Oberfläche der Pflanze und/oder ihres Bodens oder anderen Wachstumsmedien angewendet, und das/die in der Zusammensetzung vorhandenen Pflanzenöl/-öle dem Sauerstoff der Umgebung ausgesetzt wird/werden und für einen Zeitraum von einiger Stunden bis einem Tage sich polimerisieren gelassen wird/werden, um einen polimerisierten pestiziden Film zu erhalten.

11. Verfahren nach Anspruch 10, **dadurch gekennzeichnet, dass** die Oberfläche der Pflanze, an der die Zusammensetzung angewendet wird, die Oberfläche der Wurzel, des Stängels oder der Blätter, oder der Samen oder des Bodens oder anderer Wachstumsmedien ist.

12. Verwendung des filmbildenden Trägerstoffes nach Anspruch 1 oder 2 zusammen mit einem oder mehreren transesterisierten Pflanzenölen und gegebenenfalls mit einem oder mehreren Lösungsmitteln zur Regelung der Fähigkeit der Filmschicht zur Auflösung des Pestizide.

## Revendications

1. Utilisation d'un véhicule filmogène polymérisant, dans des formulations de pesticides destinés à traiter des plantes, ledit véhicule étant constitué des composants suivants :
- une huile filmogène, qui est une huile siccative choisie dans le groupe de l'huile de tournesol, de l'huile de lin, de l'huile de graines de chanvre, de l'huile de pépins de raisin, de l'huile d'arbre ou de leurs mélanges, et
- de la lécithine,
où le rapport en masse de la lécithine à la ou aux huile(s) végétale(s) se situe dans la gamme d'environ 1 : 5 à environ 1 : 100.

2. Utilisation d'un véhicule filmogène polymérisant selon la revendication 1, où ledit véhicule filmogène polymérisant est constitué des composants selon la revendication 1 et, en tant que composant supplémentaire, d'une huile pour ajuster la consistance du film formé, laquelle huile est une huile non siccative choisie dans le groupe de l'huile de colza, de l'huile de palme, de l'huile d'olive, de l'huile de ricin ou de leurs mélanges,
où le rapport massique de l'huile siccative à l'huile non siccative est d'au moins 3 : 1 et le rapport massique de la lécithine aux huiles végétales se situe dans la gamme d'environ 1 : 5 à environ 1 : 100.

3. Utilisation d'un véhicule filmogène polymérisant selon la revendication 1 ou 2 pour former un film de pesticide bien adhérent destiné à protéger des substances actives sensibles à l'oxygène, à libérer une substance active de manière contrôlable et/ou à faciliter l'absorption de pesticides systémiques.

4. Formulation de pesticide qui se transforme en un film solide sur la surface d'une plante et/ou de son sol ou d'un autre médium de croissance, ladite formulation étant une suspoémulsion constituée du véhicule filmogène polymérisant tel que défini dans les revendications 1 ou 2 et d'un ou plusieurs pesticides et des additifs facultatifs choisis dans le groupe des émulsifiants, des agents antimousse, des agents de thixotropie, des régulateurs de pH, des stabilisants du pH, des agents dispersants, des colloïdes protecteurs et régulateurs de la viscosité, des bactéricides, des antigels, des ameublissants et des solvants ou un mélange de ceux-ci, et additionnés d'eau, à condition qu'il n'y ait aucune huile minérale présente.

5. Suspoémulsion de pesticides selon la revendication 4, dans laquelle l'émulsifiant est un acide gras éthoxylé ou un acide gras éthoxylé modifié, l'agent antimousse est une émulsion aqueuse de silice ; l'agent de thixotropie est un additif minéral ; le régulateur de pH est l'acide citrique monohydraté ; le stabilisant de pH est le carbonate de calcium ; l'agent dispersant est le phosphate de tristyrylphénol éthoxylé, un sel d'amine d'un ester de polyarylphosphate, un alkylnaphtalènesulfonate condensé, un sel d'ammonium de l'acide lignosulfonique ou un polycarboxylate ; le colloïde protecteur et régulateur de la viscosité est la gomme xanthane ; le bactéricide est le benzoate de sodium ; l'antigel est le monopropylène glycol ; l'ameublissant est un additif de silice ; le solvant est un dérivé trans-estérifié d'huile végétale, de préférence un ester méthylique d'huile de colza ou un ester méthylique d'huile de tournesol ; et/ou en tant que solvant supplémentaire, le 1-méthoxypropanol est présent.

6. Suspoémulsion de pesticides selon la revendication 4, dans laquelle ledit ou lesdits pesticides sont choisis dans le groupe du soufre élémentaire, de l'hydroxyde de cuivre, de l'oxychlorure de cuivre, de l'oxyde de cuivre, du sulfate de cuivre basique, du captane, du tébuconazole et du thiophanate de méthyle.

7. Suspoémulsion de pesticides selon l'une quelconque des revendications 4 à 6, laquelle suspoémulsion de pesticides consiste en 5 à 30% en poids d'huile filmogène selon la revendication 1, 0,3 à 3% en poids de lécithine selon la revendication 1, 0 à 8% en poids d'huile pour ajuster la consistance du film formé selon la revendication 2, et 1 à 5% en poids d'un émulsifiant d'acide gras éthoxylé ou d'un émulsifiant d'acide gras éthoxylé modifié, chacun basé sur le poids total de la suspoémulsion de pesticides; et des additifs facultatifs et un ou plusieurs pesticides.

8. Suspoémulsion de pesticides selon les revendications 4 à 7, qui est un produit de traitement de semences auquel est mélangée une couleur en poudre.

9. Composition d'huile de lavage constituée de 50 à 90% en poids d'huile filmogène selon la revendication 1, de plus de 0 à 7% en poids de lécithine selon la revendication 1, de 0 à 20% en poids d'huile pour ajuster la consistance du film formé selon la revendication 2, et 8 à 18% en poids d'émulsifiant d'acide gras éthoxylé modifié, chacun basé sur le poids total de la composition d'huile de lavage.

10. Procédé de formation d'un film de pesticide polymérisé, **caractérisé en ce que** la formulation de pesticide selon l'une quelconque des revendications 4 à 9 est appliquée sur la surface d'une plante et/ou de son sol ou d'un autre médium de croissance, et en exposant la ou les huile(s) végétale(s) présente(s) dans la formulation à l'oxygène de l'environnement, est laissée polymériser pendant une période de quelques heures à un jour, pour obtenir le film de pesticide polymérisé.

11. Procédé selon la revendication 10, **caractérisé en ce que** la surface de la plante, à laquelle la formulation est appliquée, est la surface de la racine, de la tige ou de la feuille, ou de la graine, ou du sol ou d'un autre médium de croissance.

12. Utilisation du véhicule filmogène selon la revendication 1 ou 2 ensemble avec un ou des huile(s) végétale(s) transestérifiée(s) et éventuellement d'autre(s) solvant(s) pour contrôler la capacité de dissolution du pesticide de la couche de film.
